# EUROPÄISCHE PATENTANMELDUNG

(11) **EP 2 128 496 A2**
(43) Veröffentlichungstag der Anmeldung: **02.12.2009**
(21) Anmeldenummer: 09006899.0
(22) Anmeldetag: 22.05.2009
(51) Int. Cl.: F16H 55/36, F16H 55/44, F16H 55/48

(54) **Zahnriemenrad für einen Zahnriemenantrieb**

(30) Priorität: 26.05.2008 DE 102008025077
(71) Anmelder: IMS Gear GmbH, 78166 Donaueschingen (DE)
(72) Erfinder: Oberle, Stephan, 78050 Villingen-Schwenningen (DE)
(74) Vertreter: Patentanwälte Westphal, Mussgnug & Partner

(57) **Zusammenfassung**

Zahnriemenrad (10, 10', 100, 100') für einen Zahnriemenantrieb mit einem topf- oder glockenförmigen Grundkörper (14) aus Metall und einer auf dem Außenumfang (16) des Grundkörpers (14) angeordneten Verzahnung (20, 200), wobei die Verzahnung (20, 200) des Grundkörpers (14) auf beiden Stirnseiten (22, 24) mit je einer Bordscheibe (30, 30', 30'') abgeschlossen ist und mindestens eine der Bordscheiben (30, 30', 30") als separates Teil ausgebildet ist.

## Beschreibung

Die Erfindung betrifft ein Zahnriemenrad für einen Zahnriemenantrieb.

Stand der Technik sind die Druckschriften DE 10 2005 061 481 A1, DE 10 2006 059 946 A1, DE 103 52 256 A1, DE 102 37 557 A1, DE 10 2004 038 681 A1, DE 10 2005 006 673 A1, DE 697 23 523 T2 und DE 297 15 257 U1.

Der Erfindung liegt die Aufgabe zugrunde, ein Zahnriemenrad für einen Zahnriemenantrieb zur Verfügung zu stellen, welches kostengünstig in möglichst wenigen Verfahrensschritten hergestellt werden kann und einen Zahnriemen sicher zu führen in der Lage ist.

Diese Aufgabe wird erfindungsgemäß gelöst durch ein Zahnriemenrad mit den Merkmalen des Anspruchs 1.

Vorteilhafte Ausführungen der Erfindung sind in den Unteransprüchen angegeben, ebenso Verfahren zur Herstellung erfindungsgemäßer Zahnriemenräder und eine Verwendung für ein solches.

Im Folgenden wird die Erfindung anhand von zwei in Zeichnungen dargestellten Ausführungsbeispielen näher erläutert. Es zeigen
- Fig. 1: eine perspektivische Darstellung eines ersten Ausführungsbeispiels eines Zahnriemenrads mit spanend eingebrachter Verzahnung und mit Mitnahmenocken,
- Fig. 2: eine perspektivische Darstellung eines zweiten Ausführungsbeispiels eines Zahnriemenrads mit spanend eingebrachter Verzahnung,
- Fig. 3: eine perspektivische Darstellung eines dritten Ausführungsbeispiels eines Zahnriemenrads mit umspritzter Verzahnung aus Kunststoff und mit Mitnahmenocken,
- Fig. 4: eine perspektivische Darstellung eines vierten Ausführungsbeispiels eines Zahnriemenrads mit umspritzter Verzahnung aus Kunststoff,
- Fig. 5: eine perspektivische Darstellung eines achsparallelen Servolenkungsantriebs, in dem ein erfindungsgemäßes Zahnriemenrad seine Verwendung findet,
- Fig. 6: einen Axialschnitt durch das in dem in Fig. 5 dargestellten Servolenkungsantrieb verwendete Zahnriemenrad mit seiner verwendungsgemäßen Umgebung und
- Fig. 7: eine Seitenansicht einer Bordscheibe mit Grundkörper.

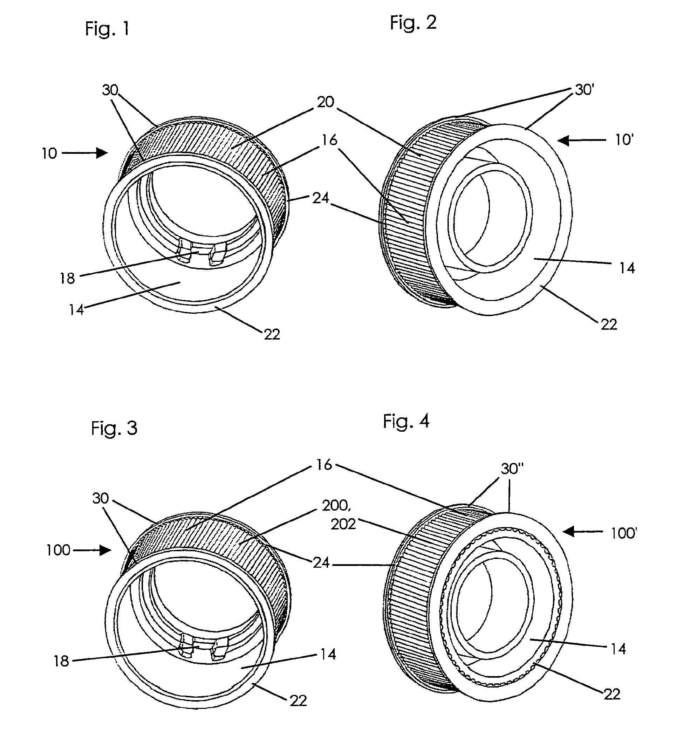

Den vier in den Abbildungen 1 bis 4 dargestellten Ausführungsbeispielen von Zahnriemenrädern 10, 10', 100, 100' ist ein topf- oder glockenförmiger Grundkörper 14 aus Metall als formgebendes Element gemein. Gleiche Teile sind mit gleichen Bezugszeichen bezeichnet.

Der Grundkörper 14 ist den Ausführungsbeispielen entsprechend nahezu bodenlos. Von dem Boden bleibt maximal ein Rand erhalten, so dass zentral ein großes Loch vorhanden ist. Der Grundkörper 14 besteht folglich im Wesentlichen nur aus einer hohlzylindrischen Wandung mit einem inneren Querschnitt und einem äußeren Querschnitt.

Der innere Querschnitt wird in den in Figur 1 und Figur 3 dargestellten Ausführungsbeispielen in axialer Richtung stufig kleiner. In den Ausführungsbeispielen der Figuren 2 und 4 ist der innere Querschnitt in axialer Richtung konstant. Auf einem Außenumfang 16 des Grundkörpers 14 bzw. der Wandung ist eine Verzahnung 20, 200 aufgebracht.

Die Verzahnung 20, 200 verläuft vorzugsweise achsparallel zum Grundkörper 14. Es sind grundsätzlich auch andere, nicht dargestellte Geometrien für die Verzahnungen 20, 200 denkbar. Es muss hierdurch lediglich eine Kraftübertragung auf einen entsprechenden Riemen ermöglicht werden. Im Falle der dargestellten Ausführungsbeispiele ist es ein Zahnriemen mit zu seiner Länge senkrechter Verzahnung. Bei einem Riemen ohne Verzahnung wäre beispielsweise eine Aufrauhung der Oberfläche des Grundkörpers 14 ausreichend.

Die Verzahnung 20, 200 des Grundkörpers 14 ist in den ersten beiden Ausführungsbeispielen (Fig. 1, Fig. 2) spanend in den Grundkörper 14 eingebracht. Die Verzahnung 20, 200 kann hierzu besonders vorteilhaft durch Wälzfräsen in den Grundkörper 14 eingebracht werden. Unter anderem ist es besonders vorteilhaft, als Metall des Grundkörpers 14 Stahlblech zu wählen, um das Tiefziehen zu erleichtern, ein stabiles Zahnriemenrad herzustellen und die spanende Einbringung der Verzahnung 20 zu ermöglichen.

Alternativ zum spanenden Einbringen einer Verzahnung 20 kann eine Verzahnung 200 durch eine konturierte Kunststoffschicht 202 auf den Außenumfang des Grundkörpers 14 aufgebracht sein.

Dies entspricht den Ausführungsbeispielen 3 und 4 (Fig. 3, Fig. 4). Besonders vorteilhaft ist es, die konturierte Kunststoffschicht 202 auf den Außenumfang des Grundkörpers 14 aufzuspritzen.

Die Verzahnung 20, 200 ist axial auf beiden Stirnseiten 22, 24 des Grundkörpers 14 von je einer Bordscheibe 30, 30', 30" begrenzt. Durch den Abschluss der Verzahnung 20, 200 an den Stirnseiten 22, 24 des Grundkörpers 14 mit den Bordscheiben 30, 30', 30" ist eine sichere Führung eines Zahnriemens gewährleistet. Der Zahnriemen wird durch die überstehenden Bordscheiben 30, 30', 30" vor einem Herabrutschen gesichert.

Die Bordscheibe 30, 30', 30" hat einen größeren Außendurchmesser als der Grundkörper 14, um eine sichere Führung des Riemens zu ermöglichen. Es kommen verschiedene Innendurchmesser für die Bordscheibe 30, 30', 30" in Frage.

Der Innendurchmesser der Bordscheibe 30 kann etwa gleich dem Außenumfang des Grundkörpers 14 sein, wenn die Bordscheibe 30 beispielsweise neben der Verzahnung 20, 200 am Rand des Zahnriemenrades 10, 100 bereitgestellt sein soll. Die Bordscheibe 30 würde somit eine Stirnseite 22, 24 des Grundkörpers 14 radial nach außen erweitern, wenn sie bündig aufgesetzt wird. Dies ist im ersten Ausführungsbeispiel (Fig. 1) gezeigt.

Der Innendurchmesser der Bordscheibe 30' kann auch gleich dem Innendurchmesser des Grundkörpers 14 sein, wie es im zweiten Ausführungsbeispiel (Fig. 2) dargestellt ist. In diesem Fall kann sich die Verzahnung 20, 200 über die gesamte Breite des Grundkörpers 14 erstrecken. Das wäre besonders dann von Bedeutung, wenn die Verzahnung 20, 200 nach radial außen über den Außenumfang des Grundkörpers 14 hinaus erhaben wäre, wie es in dem dritten und vierten Ausführungsbeispiel (Figuren 3 und 4) ausgeführt ist. Ein Innendurchmesser der Bordscheibe 30 etwa gleich dem Außenumfang des Grundkörpers 14 und ein Aufsetzen der Bordscheibe 30 neben der Verzahnung 20, 200 erzwänge nämlich eine entsprechende Berücksichtigung, ggf. Nachbearbeitung beim Aufbringen der Verzahnung.

Eine dritte Möglichkeit für die Wahl des Innendurchmessers der Borscheibe 30" ist im vierten Ausführungsbeispiel (Fig. 4) eines Zahnriemenrades 100' ausgeführt. Der Innendurchmesser der Bordscheibe 30" ist hier kleiner als der Innendurchmesser des Grundkörpers 14.

Die Bordscheiben 30, 30', 30" haben neben der Führung des Zahnriemens auch die Aufgabe, den Grundkörper 14 zu verstärken. Sie können entweder durch Verschweißen, durch Aufpressen oder durch Verstemmen am Grundkörper 14 angebracht sein. Dazu sollten die Bordscheiben 30, 30', 30" aus einem geeigneten Material bestehen, bspw. aus dem gleichen wie der Grundkörper 14. Besonders vorteilhaft ist es alternativ zu den vorgenannten Varianten, eine Bordscheibe 30, 30', 30" aus Kunststoff auf einer Stirnseite 22, 24 des Grundkörpers 14 anzuspritzen.

Es liegt im Rahmen der Erfindung, dass eine oder beide Bordscheiben 30, 30', 30'' in einem Fertigungsschritt gemeinsam mit der konturierten Kunststoffschicht 202 auf den Grundkörper 14 aufgebracht wird. Das Aufbringen der aus Kunststoff bestehenden Verzahnung mit gleichzeitig einstückig angeformten Bordscheibe bzw. Bordscheiben kann z.B. durch Kunststoffumspritzen erfolgen.

Bei spanend in das tiefgezogene Metallteil eingebrachter Verzahnung 20, 200 in das Zahnriemenrad 10 müssen beide Bordscheiben 30, 30', 30" als separate Teile ausgebildet sein. Der Verfahrensschritt der spanenden Bearbeitung macht es nämlich notwendig, dass über die Stirnseiten 22, 24 hinaus ein Auslauf für den Fräser, der die Verzahnung fräst, gegeben ist.

Durch die Wahl der konturierten Kunststoffschicht 202 als aufgebrachte Verzahnung 200 ist eine Ausführungsform der Bordscheibe 30, 30', 30" möglich, bei der die Bordscheibe 30, 30', 30" in die konturierte Kunststoffschicht 202 eingeklipst wird. Eine andere Befestigung der Bordscheibe 30, 30', 30" ist bspw. durch Formschluss der Bordscheibe 30, 30', 30" mit der konturierten Kunststoffschicht 202 gegeben. Verbindungen zwischen Teilen aus Kunststoff 30, 30', 30'', 202 können alternativ auch durch Verschweißen mit Ultraschall oder mit Laser ausgeführt sein.

Das Zahnriemenrad 10, 100 soll eine Kraft von einer Ausgangswelle eines Antriebs auf einen Zahnriemen übertragen. Das Zahnriemenrad 10, 100 muss folglich direkt oder indirekt von der Ausgangswelle angetrieben werden können. Hierzu ist bspw. der Grundkörper 14 mit Mitnahmenocken 18 versehen, wobei die Mitnahmenocken 18 im Loch des Grundkörpers radial nach innen abstehen.

In den Figuren 1 und 3 ist jeweils eine solche Mitnahmenocke 18 zu sehen. Die Mitnahmenocken 18 können in entsprechende Konturen der Ausgangswelle des Antriebs eingreifen.

Für den Fall, dass die Ausgangswelle oder ein anderes mit dem Zahnriemenrad 10, 10', 100, 100' in Wirkverbindung stehendes Element statt negativer Ausformungen zur Aufnahme von Mitnahmenocken 18 positive Erhebungen aufweist, die bspw. als Nocken ausgebildet sind, sind im Grundkörper 14 alternativ hierzu in nicht dargestellter Weise Aussparungen zur Aufnahme solcher Erhebungen vorgesehen.

Kraftschlüssige Verbindungen zwischen Zahnriemenrad 10, 100 und Ausgangswelle sind alternativ auch durch Presspassung oder andere Verbindungen ausführbar. Besonders vorteilhaft ist bspw. eine Fixierung einer Bordscheibe mit solchen Verbindungen auf dem antreibenden Element.

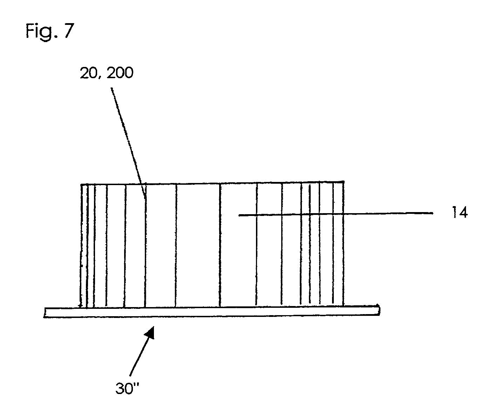

Ein weiteres in Figur 7 dargestelltes Ausführungsbeispiel einer Bordscheibe 30''' geht über die Ausführungsbeispiele der Figuren 1 bis 4 insofern hinaus, als dass die Bordscheibe 30''' einen topf- oder glockenförmigen Grundkörper 14 mit Verzahnung 20, 200 bereitstellt. Zwei solche Bordscheiben 30''' bilden in koaxialer Anordnung gemeinsam ein Zahnriemenrad, wenn ihre Grundkörper einander zugewandt miteinander verbunden sind, so dass die Bordscheiben 30''' einander abgewandt angeordnet sind.

Ein Verfahren zur Herstellung eines Zahnriemenrades 10, 10' wie bspw. in den Ausführungsbeispielen 1 und 2 angegeben, weist als ersten Schritt das Tiefziehen des topf- oder glockenförmigen Grundkörpers 14 aus einem Metall auf. Ein zweiter Schritt ist das spanende Einbringen der Verzahnung 20 in den Grundkörper 14 an seinem Außenumfang 16. In einem dritten Schritt werden zwei Bordscheiben 30, 30', 30'' an den Stirnseiten 20, 24 des Grundkörpers 14 bereitgestellt. Abschließend wird mindestens eine der Bordscheiben 30, 30', 30" an einer Stirnseite 22, 24 des Grundkörpers 14 befestigt.

Ein Verfahren zur Herstellung eines Zahnriemenrades 100, 100', wie etwa mit den Ausführungsbeispielen 3 und 4 angegeben, weist als ersten Verfahrensschritt ebenfalls das Tiefziehen des topf- oder glockenförmigen Grundkörpers 14 aus einem Metall auf. In einem zweiten Verfahrensschritt wird die Verzahnung 200 aus Kunststoff auf den Grundkörper an seinem Außenumfang 16 aufgebracht. In einem dritten Verfahrensschritt wird mindestens eine Bordscheibe 30, 30', 30'' an den Stirnseiten 22, 24 des Grundkörpers 14 bereitgestellt, wonach abschließend in einem vierten Verfahrensschritt mindestens eine Bordscheibe 30, 30', 30" an einer der Stirnseiten des Grundkörpers 14 befestigt wird.

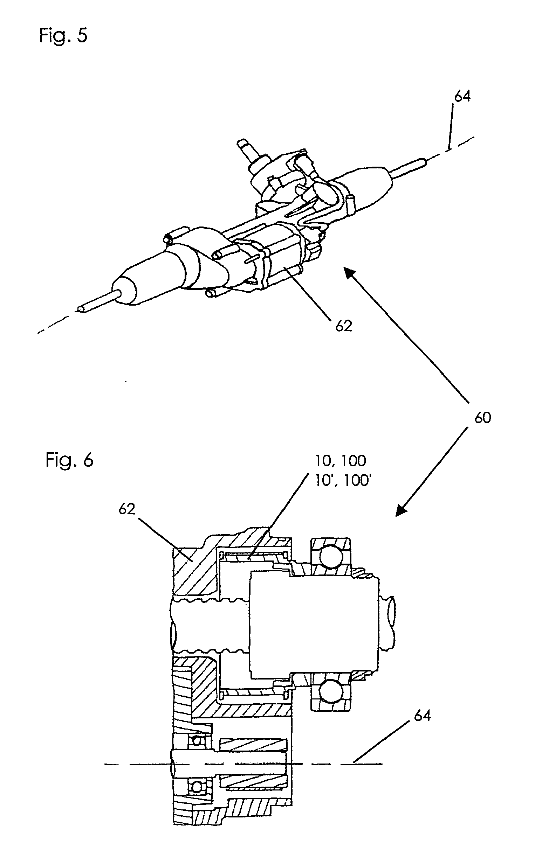

Die Zahnriemenräder 10, 10', 100, 100' und das zuletzt beschriebene Zahnriemenrad bestehend aus zwei Bordscheiben 30''' werden vorzugsweise in Servolenkungsantrieben verwendet. Solch ein Servolenkungsantrieb 60 ist in den Figuren 5 und 6 dargestellt. In Abbildung 5 wird deutlich, dass der Servolenkungsantrieb 60 achsparallel ausgeführt ist. Ein Antriebsgehäuse 62 des Servolenkungsantriebs 60 ist dabei parallel zu einer Servolenkungsachse 64 angeordnet. Das Antriebsgehäuse 62 beinhaltet das Zahnriemenrad, welches über den Zahnriemen eine Kraftübertragung auf die koaxiale Servolenkungsachse 64 bewirkt.

### Bezugszeichenliste

- 10, 10': Zahnriemenrad
- 12: Aussparungen
- 14: Grundkörper
- 16: Außenumfang
- 18: Mitnahmenocken

- 20: gefräste Verzahnung
- 22: erste Stirnseite
- 24: zweite Stirnseite

- 30, 30', 30", 30''': Bordscheibe

- 60: Servolenkungsantrieb
- 62: Antriebsgehäuse
- 64: Servolenkungsachse

- 100, 100': Zahnriemenrad

- 200: aufgebrachte Verzahnung
- 202: konturierte Kunststoffschicht

## Patentansprüche

1. Zahnriemenrad (10, 10', 100, 100') für einen Zahnriemenantrieb mit
- einem topf- oder glockenförmigen Grundkörper (14) aus Metall und
- einer auf dem Außenumfang (16) des Grundkörpers (14) angeordneten Verzahnung (20, 200),
**dadurch gekennzeichnet, dass**
- die Verzahnung (20, 200) des Grundkörpers (14) auf beiden Stirnseiten (22, 24) mit je einer Bordscheibe (30, 30', 30") abgeschlossen ist und
- mindestens eine der Bordscheiben (30, 30', 30'') als separates Teil ausgebildet ist.

2. Zahnriemenrad (10, 10', 100, 100') nach Anspruch 1,
**dadurch gekennzeichnet, dass**
die Verzahnung (200) durch eine konturierte Kunststoffschicht (202) auf den Außenumfang des Grundkörpers (14) aufgebracht ist.

3. Zahnriemenrad (10, 10', 100, 100') nach Anspruch 2,
**dadurch gekennzeichnet, dass**
die konturierte Kunststoffschicht (202) auf den Außenumfang des Grundkörpers (14) aufgespritzt ist.

4. Zahnriemenrad (10, 10', 100, 100') nach mindestens einem der Ansprüche 1 bis 3,
**dadurch gekennzeichnet, dass**
die mindestens eine Bordscheibe (30, 30', 30'') durch Verschweißen am Grundkörper (14) angebracht ist.

5. Zahnriemenrad (10, 10', 100, 100') nach mindestens einem der Ansprüche 1 bis 3,
**dadurch gekennzeichnet, dass**
die mindestens eine Bordscheibe (30, 30', 30") durch Aufpressen am Grundkörper (14) angebracht ist.

6. Zahnriemenrad (10, 10', 100, 100') nach mindestens einem der Ansprüche 1 bis 3,
**dadurch gekennzeichnet, dass**
die mindestens eine Bordscheibe (30, 30', 30") durch Verstemmen am Grundkörper (14) angebracht ist.

7. Zahnriemenrad (10, 10', 100, 100') nach einem der vorangehenden Ansprüche,
**dadurch gekennzeichnet, dass**
eine Bordscheibe (30, 30', 30") aus Kunststoff auf einer Stirnseite (22, 24) des Grundkörpers (14) angespritzt ist.

8. Zahnriemenrad (10, 10', 100, 100') nach mindestens einem der Ansprüche 2 bis 6,
**dadurch gekennzeichnet, dass**
eine Bordscheibe (30, 30', 30") in die konturierte Kunststoffschicht (202) eingeklipst ist.

9. Zahnriemenrad (10, 10', 100, 100') nach mindestens einem der Ansprüche 2 bis 6,
**dadurch gekennzeichnet, dass**
eine Bordscheibe (30, 30', 30'') durch Formschluss mit der konturierten Kunststoffschicht (202) verbunden ist.

10. Zahnriemenrad (10, 10', 100, 100') nach mindestens einem der Ansprüche 1 oder 4 bis 6,
**dadurch gekennzeichnet, dass**
die Verzahnung (20) spanend in den Grundkörper (14) eingebracht ist.

11. Zahnriemenrad (10, 10', 100, 100') nach mindestens einem der Ansprüche 1, 4 bis 6 oder 10,
**dadurch gekennzeichnet, dass** die Verzahnung (20) durch Wälzfräsen in den Grundkörper (14) eingebracht ist.

12. Zahnriemenrad (10, 10', 100, 100') nach einem der vorangehenden Ansprüche,
**dadurch gekennzeichnet, dass** das Metall des Grundkörpers (14) Stahlblech ist.

13. Zahnriemenrad (10, 10', 100, 100') nach einem der vorangehenden Ansprüche,
**dadurch gekennzeichnet, dass**
der Grundkörper (14) mit Mitnahmenocken (18) versehen ist, wobei die Mitnahmenocken (18) nach radial innen vom Grundkörper (14) abstehen.

14. Zahnriemenrad (10, 10', 100, 100') nach einem der vorangehenden Ansprüche,
**dadurch gekennzeichnet, dass**
der Grundkörper (14) Aussparungen zur Aufnahme von Nocken einer Welle oder Nabe aufweist.

15. Zahnriemenrad (10, 10', 100, 100') nach mindestens einem der Ansprüche 2 bis 6, 8 oder 9,
**dadurch gekennzeichnet, dass**
die konturierte Kunstoffschicht (202) und eine Bordscheibe (30, 30', 30") einstückig ausgeführt ist.

16. Zahnriemenrad (10, 10', 100, 100') nach mindestens einem der Ansprüche 2 bis 6, 8, 9 oder 15,
**dadurch gekennzeichnet, dass**
mindestens eine Verbindung zwischen Teilen aus Kunststoff (30, 30', 30'', 202) durch Verschweißen mit Ultraschall ausgeführt ist.

17. Zahnriemenrad (10, 10', 100, 100') nach mindestens einem der Ansprüche 2 bis 6, 8, 9, 15 oder 16,
**dadurch gekennzeichnet, dass**
mindestens eine Verbindung zwischen Teilen aus Kunststoff (30, 30', 30" ,202) durch Verschweißen mit Laser ausgeführt ist.

18. Verfahren zur Herstellung eines Zahnriemenrads (10, 10', 100, 100') nach einem der Ansprüche 1, 4 bis 6 oder 10 bis 14, aufweisend die Schritte:
- Tiefziehen des topf- oder glockenförmigen Grundkörpers (14) aus einem Blech,
- spanendes Einbringen der Verzahnung (20) in den Grundkörper (14) an seinem Außenumfang (16),
- Bereitstellen zweier Bordscheiben (30, 30', 30") an den Stirnseiten (22, 24) des Grundkörpers (14),
- Befestigen mindestens einer der Bordscheiben (30, 30', 30'') an einer Stirnseite (22, 24) des Grundkörpers (14).

19. Verfahren zur Herstellung eines Zahnriemenrads (10, 10', 100, 100') nach einem der Ansprüche 1 bis 9 oder 12 bis 17, aufweisend die Schritte:
- Tiefziehen des topf- oder glockenförmigen Grundkörpers (14) aus einem Blech,
- Aufbringen der Verzahnung (200) aus Kunststoff auf den Grundkörper (14) an seinem Außenumfang (16),
- Bereitstellen einer Bordscheibe (30, 30', 30") für eine Stirnseite (22, 24) des Grundkörpers (14),
- Befestigen der Bordscheibe (30, 30', 30") an einer der Stirnseiten (22, 24) des Grundkörpers (14).

20. Verwendung eines Zahnriemenrads (10, 10', 100, 100') nach einem der vorhergehenden Ansprüche in einem Servolenkungsantrieb (60).

21. Verwendung nach Anspruch 20,
**dadurch gekennzeichnet, dass**
der Servolenkungsantrieb (60) achsparallel ausgeführt ist.
